# EUROPÄISCHE PATENTANMELDUNG

(11) **EP 2 108 261 A1**
(43) Veröffentlichungstag der Anmeldung: **14.10.2009**
(21) Anmeldenummer: 08007200.2
(22) Anmeldetag: 11.04.2008
(51) Int. Cl.: A21C 9/08, A21C 13/00, A21B 3/15

(54) **Textilie für Bäckereibedarf**

(71) Anmelder: Busch Fashion GmbH, 48703 Stadtlohn (DE)
(72) Erfinder: Sanjeev Swamy, Fort Mumbai 400038 (IN)
(74) Vertreter: Werner, Anne-Estelle

(57) **Zusammenfassung**

Die Erfindung betrifft Textilien, die mit einer antiadhäsiven und antimikrobiellen Ausrüstung ausgestattet sind und sich sehr gut als Bäckereitextilie eignen, wobei allein durch die Ausrüstung der Textilie erreicht wird, dass auf ein Bestäuben der Textilie (13) mit Mehl, um eine Festkleben des Teiges (22) zu verhindern, wie es bisher notwendig war, verzichtet werden kann.

## Beschreibung

Die vorliegende Erfindung bezieht sich auf eine Bäckereitextilie bzw. auf die Verwendung einer Textilie als Bäckereitextilie.

Sowohl in handwerklich als auch in industriell ausgerichteten Bäckereien werden Textilien als Hilfsmittel beim Zwischenlagern, Formen und Backen von Teigeinheiten verwendet. Auch beim Backen in Haushalten wird z.B. auf sogenannte Teigtücher zurückgegriffen, um Teig abzudecken oder auszurollen.

Insbesondere bei klebrigem Teig stellt sich das Problem, dass leicht Teigreste bzw. der gesamte Teigklumpen an den herkömmlichen Textilien hängen bleiben. Üblicherweise wird dem entgegengewirkt, indem die Textilie mit Mehl bestäubt wird. Das Mehl wirkt quasi als Antihaftmittel, so dass sich zumindest der Teigklumpen als Ganzes im Wesentlichen von der Textilie löst. Allerdings kann ein Hängenbleiben auch von letzten Teigresten nur durch die Anwendung von großen Mehlmengen vermieden werden, die nicht nur die Produktionskosten erhöhen, sondern sich auch negativ auf die Eigenschaften des jeweiligen Teiges auswirken können. Außerdem trägt die Bestäubung mit Mehl auch zur Verschmutzung der im Backbetrieb verwendeten Textilien bei. Vor allem in Bäckereien erschwert die bisherige Praxis des Einstäubens von Textilien mit Mehl die Einhaltung von Hygienevorschriften und führt über die Notwendigkeit, die Textilien oft zu waschen oder zu ersetzen, zu erhöhten Betriebskosten.

Es ist eine Aufgabe der vorliegenden Erfindung, eine Bäckereitextilie zur Verfügung zu stellen, bei der auf das Bestäuben mit Mehl verzichtet werden kann.

Diese Aufgabe wird durch eine Bäckereitextilie aus einer Textilie, die mit einer antiadhäsiven und antimikrobiellen Ausrüstung versehen ist, gelöst.

Es hat sich herausgestellt, dass Textilien, die mit einer antiadhäsiven und antimikrobiellen Ausrüstung ausgestattet sind, sich sehr gut als Bäckereitextilie eignen, wobei allein durch die Ausrüstung der Textilie erreicht wird, dass auf ein Bestäuben der Textilie, wie es bisher notwendig war, verzichtet werden kann.

Bisher waren Textilien, die mit speziellen antiadhäsiven Ausrüstungen, wie etwa hydrophoben oder oleophoben Ausrüstungen aus der Bekleidungsindustrie bekannt, die solche Textilien z.B. zu Funktionskleidung für den Freizeitbereich weiterverarbeitet. Hydrophobe Ausrüstungen werden dabei u.a. für regendichte Kleidung verwendet. Beispiele für derartige Ausrüstungen finden sich in der EP 1 268 919 B1 oder in der EP 1 364 088 B1. Erstaunlicherweise führen derartige Ausrüstungen auch dazu, dass Verschmutzungen wie etwa Teigreste an den entsprechend ausgerüsteten Textilien nicht haften bleiben.

Die Eignung zur Bäckereitextilie wird durch die zusätzlich vorhandene antimikrobielle Wirkung der Ausrüstung wesentlich erhöht. Selbst wenn bei sehr klebrigen Teigen doch noch Teigreste haften bleiben würden, würde dennoch gewährleistet werden, dass diese Teigverschmutzungen keine größeren Hygienerisiken bergen, so dass ein Reinigen oder Auswechseln der Textilie nicht so schnell notwendig wird. Dadurch kann auch bei klebrigeren Teigen auf ein Bestäuben der Textilie mit Mehl verzichtet werden.

In bevorzugten Ausführungsformen der Erfindung weist die Ausrüstung zu antimikrobiellen Zwecken elementares Silber auf. Besonders bevorzugt liegt das elementare Silber in Form von Nanopartikeln vor. Die antimikrobielle Wirkung des Silbers wird durch die Bereitstellung als Nanopartikel verstärkt. Nanopartikel lassen sich gut homogen über die gesamte Textiloberfläche verteilen und haben eine besonders große Oberfläche, über die das Silber seine antimikrobielle Wirkung ausüben kann.

Vorteilhafterweise weist die Ausrüstung zu antiadhäsiven Zwecken Fluorverbindungen auf. Besonders bevorzugt sind dabei Fluorkohlenstoffverbindungen, wie z.B. Polytetrafluorethylen. Viele Fluorverbindungen weisen u.a. hydrophobe Eigenschaften auf, die zu einer Antihaftwirkung von Teig an einer damit ausgerüsteten Textilie führen.

In bevorzugten Ausführungsformen umfasst die Ausrüstung zu antiadhäsiven Zwecken mindestens zwei Hydrophobierungs- oder Oleophobierungs-Komponenten, wobei eine erste Komponente mindestens ein Dispersionsmittel und eine zweite Komponente mindestens eine dispergierte Phase oder Kolloid umfasst und Dispersionsmittel und dispergierte Phase in einem Gelzustand vorliegen und wobei Kolloide der dispergierten Phase anisotrop im Dispersionsmittel verteilt sind, so dass die Kolloide im Bereich einer Ausrüstungsschichtoberfläche, welche eine Phasengrenzschicht zwischen Ausrüstungsschicht und umgebender Atmosphäre bildet, konzentriert vorliegen. Die besondere anisotrope Verteilung der Kolloide der dispergierenden Phase führt zu einer besonders starken Hydro- bzw. Oleophobierung der ausgerüsteten Textilie. Andererseits wird eine Auffrischung der antiadhäsiven Wirkung der Ausrüstung ermöglicht, indem die Ausrüstung im Gel-Zustand vorliegt. Durch Wärmezufuhr, z.B. in einem Wäschetrockner, wird dieser Gel-Zustand in einen Sol-Zustand überführt, der die anisotrope Verteilung der Komponenten wieder herstellt.

Vorzugsweise umfasst die dispergierte Phase hydro- oder oleophobe Kolloide, die an der Ausrüstungsschichtoberfläche konzentriert in einer den Hydrophobierungseffekt begünstigenden räumlichen Anordnung vorliegen. Abgesehen von Fluorverbindungen sind als wasserabstoßenden, unpolare Verbindungen u.a. Silikonöle, fettmodifizierte Ester und Ether, Fettsäureester, längerkettige Alkylether und polykondensierte Fettsäureamide besonders geeignet.

Besonders bevorzugt umfasst die dispergierte Phase feste Partikel, die an der Ausrüstungsschichtoberfläche kolumnare Strukturen mit gerichteter Orientierung ausbilden, so dass die Mikrorauhigkeit der Oberfläche einen "Lotus"-Effekt erzeugt. Als vorteilhaft haben sich dafür z. B. mikronisierte Wachse, Wachse als fettmodifizierte Aminoalkylierungs- oder Polyamidprodukte und hydrophobe Siliziumdioxid-Nanopartikel erwiesen. Der Lotus-Effekt basiert auf einer dreidimensionalen Oberflächenstruktur, die den Selbstreinigungseffekt der damit versehenen Oberfläche sehr begünstigt.

Die beschriebenen Ausrüstungen haben nicht nur den Vorteil einer hohen antiadhäsiven und antimikrobiellen Wirkung, sondern auch den Vorteil, dass die damit versehenen Textilien mehrfach gewaschen werden können, um insbesondere Teigverschmutzungen zu entfernen, ohne dass sie diese Wirkungen in wesentlichem Umfang verlieren würden.

Die hier beschriebenen Bäckereitextilien eignen sich insbesondere zum Abdecken von Teigeinheiten, zum Ausrollen von Teigeinheiten, als Unterlage zum Backen von Teigeinheiten und als Hilfsmittel zum Formen von Teigeinheiten. Dabei kann bei allen Tätigkeiten, bei denen die Bäckereitextilie eingesetzt wird, vollständig auf ein Bestäuben mit Mehl verzichtet werden, um ein Festkleben von Teig an der Textilie zu verhindern.

Vorteilhafte Ausgestaltungen finden sich in den abhängigen Ansprüchen.

Die vorliegende Erfindung soll unter Bezugnahme auf ein bevorzugtes Ausführungsbeispiel näher erläutert werden. Dazu zeigen
- Figur 1: schematisch eine Ausführungsform einer Bäckereitextilie;
- Figur 2: schematisch die Struktur einer Ausführungsform einer Bäckereitextilie;
- Figur 3: schematisch die Verwendung der Bäckereitextilie zum Abdecken von Teig; und
- Figur 4: schematisch die Verwendung der Bäckereitextilie als Unterlage unter Teig.

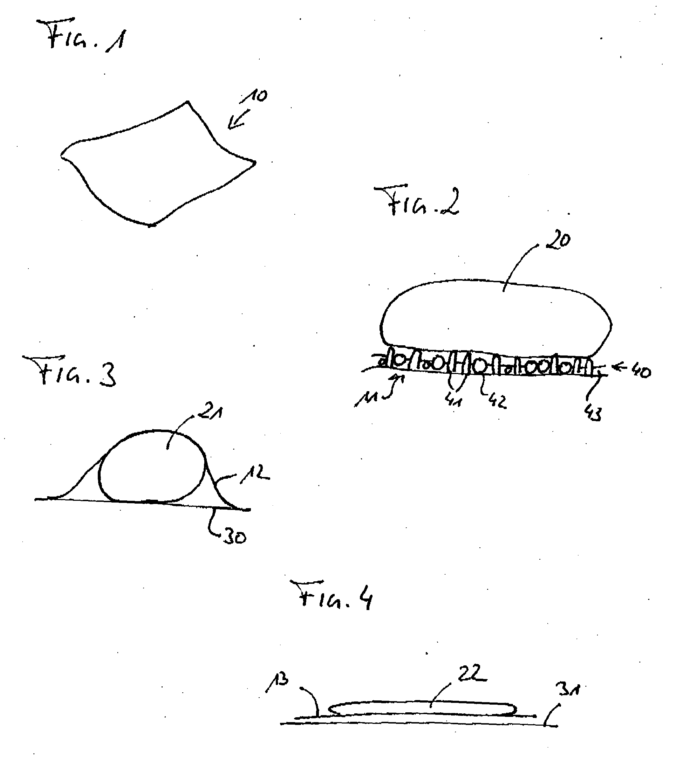

In Figur 1 ist schematisch eine Ausführungsform der Bäckereitextilie als Teigtuch 10 dargestellt. Im dargestellten Beispiel handelt es sich um ein aus Fasern gewebtes Material mit gesäumten Rand, um ein Einreißen oder Ausfransen zu vermeiden. Allgemein kann die Bäckereitextilie ein flexibles Material sein, das aus einem Verbund von Fasern besteht. Der Verbund kann z.B. vliesartig, gewebt, gewirkt oder gestrickt sein. Bei dem Fasermaterial kann es sich um Naturfasern wie etwa Baumwolle, Leinen, Seide, Viskose usw. oder auch um synthetische Fasern wie etwa Polyamid, Polyester, Polypropylen, Plyethylen, Polyacrylnitril, Polyacetat, Polyaramid usw. handeln.

Nach Herstellung der Textilie wird sie vor allem durch chemische Ausrüstung veredelt, um sie mit der antiadhäsiven und antimikrobiellen Funktion zu versehen. So lässt sich zum Beispiel eine hydrophobe Emulsion durch Foulardieren, Tauchen, Walzen, Sprühen o.ä. auf die Textilie aufbringen. Als hydrophobe Komponente können beispielsweise neben Fluorverbindungen, bevorzugt Fluor-Kohlenstoff-Verbindungen, auch Paraffine oder Siliziumverbindungen, wie z.B. Polysiloxane dispergiert werden. Um das Auftragen besser kontrollieren zu können, kann die Emulsion auch Verdickungsmittel aufweisen, um die Viskosität zu erhöhen. Bevorzugt wird die Emulsion bei erhöhten Temperaturen, z.B. zwischen ca. 140°C und 170°C mit Einwirkzeiten um 1 min oder länger aufgebracht.

Wahlweise können der Emulsion gleichzeitig Silberverbindungen zugegeben werden. Die antimikrobielle Silberausrüstung kann auch in einem getrennten Schritt durchgeführt werden. Elementares Silber, insbesondere in Form von Nanopartikeln kann auf die Textilie aufgebracht werden, indem man eine Silbersalzlösung und ein Reduktionsmittel auf die Textilie aufbringt, die die Silberionen zu elementarem Silber reduziert. Eine Möglichkeit besteht z.B. darin, Silbernitrat als Silbersalz und Glukose, bevorzugt in wässriger Lösung, als Reduktionsmittel einzusetzen. Dabei bilden sich Silberpartikel einer Größe von etwa 1nm bis 100nm.

Eine weitere Möglichkeit, die Ausrüstung durchzuführen, besteht darin, ein Sol-Gel-System mit mindestens zwei Hydrophobierungs- oder Oleophobierungs-Komponenten zu verwenden, wobei eine erste Komponente mindestens ein Dispersionsmittel und eine zweite Komponente mindestens eine dispergierte Phase oder Kolloid umfasst und Dispersionsmittel und dispergierte Phase in einem Gelzustand vorliegen und wobei Kolloide der dispergierten Phase anisotrop im Dispersionsmittel verteilt sind, so dass die Kolloide im Bereich einer Ausrüstungsschichtoberfläche, welche eine Phasengrenzschicht zwischen Ausrüstungsschicht und umgebender Atmosphäre bildet, konzentriert vorliegen. Als dispergierte Phase werden sehr unpolare, wasser- oder ölabstossende Substanzen eingesetzt.

Besonders geeignet für eine Selbstorganisation der Hydrophobierungs- oder Oleophobierungsschicht, d.h. einer Phasenseparation, sind einerseits Silikonöle, fettmodifizierte Ester, Ether oder Amide und andererseits Fettsäureester, Alkylether (C₁₂-C₂₅) oder polykondensierte Fettsäureamide. Bei der ersten Gruppe handelt es sich um hochsiedende, unpolare Flüssigkeiten, die während des Fixierungsprozess zur Phasengranze diffundieren und dort fixiert werden und den hydrophoben oder oleophoben Effekt begünstigen. Die Substanzen der zweiten Gruppe schmelzen während einer thermischen Fixierung ganz oder teilweise und dominieren die Eigenschaften der Phasengrenze als hydrophob oder oleophob.

Ferner liegen in der dispergierten Phase bevorzugt Substanzen vor, die kolumnare Strukturen ausbilden und dadurch zu einem Lotus-Effekt führen. Bevorzugt werden dazu beispielsweise mikronisierte Wachse mit Partikelgrößen von 0,1µm bis 50µm, wie z.B. Polyolefin- und Fettsäureamidwachse sowie fettmodifizierte Aminoalkylierungsprodukte, und/oder hydrophobe Siliziumdioxidpartikel eine Größe im Bereich von 5nm bis 100nm eingesetzt.

Wahlweise kann auch zusätzlich elementares Silber, etwa in Form von Nanopartikeln, bevorzugt im Größenbereich von 1 nm bis 100nm, zugegeben. Das Silber kann auch in einem von dem Ausrüsten mit dem Sol-Gel-System getrennten Schritt aufgebracht werden.

Im Sol-Gel-System können als Hydrophobierungshauptkomponenten monomere oder präpolymere bzw. präkondensierte, jedoch immer fettmodifizierte unpolare Akrylate, Methakrylate, Isocyanate oder Epoxid- oder Harnstoffderivate eingesetzt werden, die sich durch eine thermische Behandlung und entsprechende Katalysatoren waschbeständig auf de Textilie fixieren lassen.

Das Sol-Gel-System wird durch Foulardieren, Beschichten, Sprühen, Schäumen o.ä. auf der Textilie aufgebracht, bei Temperaturen im Bereich von bevorzugt ca. 50°C bis 100°C getrocknet und anschließend bei Temperaturen im Bereich von bevorzugt ca. 100°C bis 200°C während weniger Minuten fixiert.

In Figur 2 ist schematisch und lediglich beispielhaft die Struktur eine Bäckereitextilie dargestellt, die mittels eines Sol-Gel-Systems veredelt wurde, das sowohl Siliziumdioxid-Nanopartikel als auch Silber-Nanopartikel enthielt, um sowohl die antiadhäsive als auch die antimikrobielle Funktion zu erhalten. Sowohl Siliziumdioxid- als auch Silberpartikel können auch längere Zeit höheren Temperaturen ausgesetzt werden, so dass die so veredelte Textilie auch während des eigentlichen Backens einsetzbar ist. Das so entstandene Teigtuch 13 weist in seiner Ausrüstungsschicht 40 (nicht maßstabsgerecht und stark übertrieben) kolumnare Strukturen aus Siliziumdioxidpartikeln 41 sowie dazwischen verteilte Silberpartikel 42 auf. Liegt nun ein Teig 20 auf dem Teigtuch 11 sorgen insbesondere die Siliziumdioxidpartikel 41, aber zum Teil auch die Silberpartikel 42 dafür, dass der Teig 20 in der Art eines Lotus-Effekt nur über einen geringen Flächenanteil mit der Oberfläche des Teigtuchs 11 effektiv in Berührung kommt und sich daher nur geringe Adhäsionskräfte ausbilden können. Im Übrigen ist auch die Schicht 43, in der die Partikel 41, 42 eingebettet sind, hydrophob, was die Adhäsionskräfte mit dem Teig 20 reduziert. Sollten nach Entfernen des Teigs 20 doch Teigreste haften bleiben, wirken die Silberpartikel 42 vor allem dadurch, dass sie durch Beeinträchtigung des Zellstoffwechsels das Zellwachstum von beliebigen Bakterien, Pilzen oder anderen Mikroorganismen, für die der Teigrest Nährboden sein könnte, hemmen, so dass sie im wesentlichen absterben.

Die hier erläuterte Bäckereitextilie kann in ihren verschiedenen Ausführungsformen vielfältig bei Bäckereiabläufen eingesetzt werden. Eine Möglichkeit besteht z.B. darin, Teig 21 während einer Zwischenlagerung abzudecken, wie in Figur 3 schematisch dargestellt. Dabei kann es sein, dass der Teig 21 aus organisatorischen Gründen nicht sofort weiterverarbeitet werden kann, sondern auf einer Arbeitsplatte 30 oder einer anderen Unterlage abgelegt wird und durch das Tuch 12 vor Verschmutzungen aus der Umgebung geschützt werden soll.

Das kann auch eine Zwischenlagerung im tiefgekühlten Zustand umfassen. Manche Teige müssen vor der Weiterverarbeitung gehen und dazu warm und vor Luftzug geschützt zwischengelagert werden. Das Tuch 12 sorgt in einem solche Fall dafür, dass der Teig 21 vor Temperaturschwankungen und Luftzug geschützt wird. Im Gegensatz zu herkömmlichen Teigtüchern kann auf ein Einmehlen des Tuchs 12, um zu verhindern, dass beim Entfernen des Tuchs Teig daran kleben bleibt, wegen der antiadhäsiven und antimikrobiellen Wirkung des Tuchs 12 verzichtet werden.

Eine weitere wichtige Einsatzmöglichkeit ist die Verwendung als Unterlage, wie in Figur 4 schematisch dargestellt. Der Teig 22 ist auf einer Arbeitsplatte 31 bereits teilweise ausgerollt, wobei zwischen der Arbeitsplatte 31 und dem Teig 22 das Teigtuch 13 angeordnet ist, um ein Kleben des Teigs 22 an der Arbeitsplatte während des Ausrollens zu verhindern. Besonders geeignet ist der Einsatz des antiadhäsiven und antimikrobiellen Teigtuchs 13 für das Ausrollen von Backwaren, die möglichst dünn ausgerollt werden müssen, wie etwa Pizzateig oder Strudelteig. Strudel werden nach der Füllung zusammengerollt. Auch dabei kann das Teigtuch 13 ohne Einmehlen eine gute Hilfe sein, indem man den Strudel durch entsprechende Bewegung des Teigtuchs 13 zusammenrollt, wobei sich der Strudelteig gut von dem Teigtuch 13 löst. Das Teigtuch 13 lässt sich in ähnlicher Art und Weise auch als Formgebungshilfe für z.B. Brezeln verwenden. Ferner kann das Tuch 13 auch als Unterlage während der Zwischenlagerung von bereits geformten Teiglingen vor dem Backen verwendet werden, insbesondere wenn es darauf ankommt, dass die Teiglinge sich beim Entfernen vom Teigtuch 13, um dem Ofen zugeführt zu werden, nicht durch Anhaften am Teigtuch 13 verformen. Je nach Temperaturbeständigkeit der konkreten Ausrüstungsschicht des Teigtuchs 13 kann es auch während des Backens als Unterlage dienen.

### Bezugszeichen

- 10: Teigtuch
- 11: Teigtuch
- 12: Teigtuch
- 13: Teigtuch
- 20: Teig
- 21: Teig
- 22: Teig
- 30: Arbeitsplatte
- 31: Arbeitsplatte
- 40: Ausrüstungsschicht
- 41: Siliziumdioxidpartikel
- 42: Silberpartikel
- 43: hydrophobe Schicht

## Patentansprüche

1. Bäckereitextilie aus einer Textilie (10, 11, 12, 13), die mit einer antiadhäsiven und antimikrobiellen Ausrüstung versehen ist.

2. Bäckereitextilie nach Anspruch 1, **dadurch gekennzeichnet, dass** die Ausrüstung zu antimikrobiellen Zwecken elementares Silber (40) aufweist.

3. Bäckereitextilie nach Anspruch 2, **dadurch gekennzeichnet, dass** das elementare Silber in Form von Nanopartikeln (40) vorliegt.

4. Bäckereitextilie nach einem der Ansprüche 1 bis 3, **dadurch gekennzeichnet, dass** die Ausrüstung zu antiadhäsiven Zwecken Fluorverbindungen aufweist.

5. Bäckereitextilie nach einem der Ansprüche 1 bis 4, **dadurch gekennzeichnet, dass d**ie Ausrüstung zu antiadhäsiven Zwecken mindestens zwei Hydrophobierungs- oder Oleophobierungs-Komponenten umfasst, wobei eine erste Komponente mindestens ein Dispersionsmittel und eine zweite Komponente mindestens eine dispergierte Phase oder Kolloid umfasst und Dispersionsmittel und dispergierte Phase in einem Gelzustand vorliegen und wobei Kolloide der dispergierten Phase anisotrop im Dispersionsmittel verteilt sind, so dass die Kolloide im Bereich einer Ausrüstungsschichtoberfläche, welche eine Phasengrenzschicht zwischen Ausrüstungsschicht und umgebender Atmosphäre bildet, konzentriert vorliegen.

6. Bäckereitextilie nach Anspruch 5, **dadurch gekennzeichnet, dass** die dispergierte Phase hydro- oder oleophobe Kolloide umfasst, die an der Ausrüstungsschichtoberfläche konzentriert in einer den Hydrophobierungseffekt begünstigenden räumlichen Anordnung vorliegen.

7. Bäckereitextilie nach Anspruch 5 oder 6, **dadurch gekennzeichnet, dass** die dispergierte Phase feste Partikel (41) umfasst, die an der Ausrüstungsschichtoberfläche kolumnare Strukturen mit gerichteter Orientierung ausbilden, so dass die Mikrorauhigkeit der Oberfläche einen "Lotus"-Effekt erzeugt.

8. Verwendung einer Textilie nach einem der Ansprüche 1 bis 7 als Bäckereitextilie (10, 11, 12, 13).

9. Verwendung einer Textilie nach Anspruch 8 zum Abdecken einer Teigeinheiten (20).

10. Verwendung einer Textilie nach Anspruch 8 als Unterlage (12) zum Ausrollen einer Teigeinheiten (21).

11. Verwendung einer Textilie nach Anspruch 8 als Unterlage zum Backen einer Teigeinheiten.

12. Verwendung einer Textilie nach Anspruch 8 als Hilfsmittel zum Formen von Teigeinheiten.
